# EUROPEAN PATENT SPECIFICATION

(11) **EP 4 249 738 B1**
(45) Date of publication and mention of the grant of the patent: **04.06.2025**
(21) Application number: 23157955.8
(22) Date of filing: 22.02.2023
(51) Int. Cl.: F02C 3/22, F02C 7/232

(54) **GAS TURBINE ENGINE SYSTEM**
GASTURBINENMOTORSYSTEM
SYSTÈME DE MOTEUR À TURBINE À GAZ

(30) Priority: 23.03.2022 GB 202204040
(43) Date of publication of application: 27.09.2023
(73) Proprietor: Rolls-Royce plc, London N1 9FX (GB)
(72) Inventor: Bacic, Marko, Derby, DE24 8BJ (GB); Holt, Jonathan, Derby, DE24 8BJ (GB)
(74) Representative: Rolls-Royce plc

(56) References cited:
- EP-A1- 3 848 566
- EP-A1- 3 995 679
- EP-A1- 4 163 481
- EP-A2- 3 978 807
- US-A1- 2017 254 270

## Description

### TECHNICAL FIELD

The invention relates to gas turbine engine systems.

### BACKGROUND

Hydrogen-burning gas turbine engine systems are of interest for both stationary power and propulsion applications as they do not produce carbon dioxide at the point of use. In such an engine system, hydrogen is provided to combustion apparatus of an engine in gaseous form, although it may be stored in liquid form. In aircraft propulsion applications, it is important to provide for rapid shut-off of fuel to an engine in the event of a fan-blade off, shaft breakage or a similar occurrence. In a conventional gas turbine engine, a shut-off valve in the engine's fuel line may be used to isolate combustion apparatus of the engine from its fuel supply and provide rapid engine shut-down. However, unlike kerosene, gaseous hydrogen is compressible. Therefore, if a hydrogen-burning gas turbine engine is fed with hydrogen by means of a fuel line including a shut-off valve, hydrogen may continue to flow into combustion apparatus of the engine briefly following closure of the shut-off valve, driven by the pressure differential between hydrogen in the fuel line and the combustion apparatus. Fuel provided to the combustion apparatus after activation of the shut-off valve may delay shutdown of the engine sufficiently that, in the event of a shaft-break, the angular speed of a turbine of the engine may reach a critical level, leading to a disc burst or multiple blade release which in turn results in hazardous uncontained release of engine debris.

European patent application EP 3995679 discloses a fuel system for a vehicle having an engine. The fuel system includes a fuel tank for holding a hydrogen fuel in a liquid phase; a fuel delivery assembly extending from the fuel tank to the engine for providing the hydrogen fuel from the fuel tank to the engine; a vaporizer in communication with the fuel delivery assembly for heating the hydrogen fuel in the liquid phase to a gaseous phase, to a supercritical phase, or both; and a high pressure pump in fluid communication with the fuel delivery assembly at a location downstream of the vaporizer for inducing a flow of the hydrogen fuel through the fuel delivery assembly to the engine.

European patent application EP 4163481 discloses a fuel delivery system for a gas turbine engine which comprises a cryogenic fuel tank, a first fuel line for connection to the cryogenic fuel tank, a fuel pump connected to receive fuel via the first fuel line, a plurality of fuel lines connecting the fuel pump to a combustor of the gas turbine engine, a controller configured to operate the fuel delivery system, a purge gas tank connected to the first fuel line and configured to store a purge gas for purging the plurality of fuel lines and a fuel gas tank connected to the first fuel line and configured to store a fuel gas for flushing purge gas from the plurality of fuel lines.

European patent application EP 3848566 discloses a propulsion system which includes a solid hydride storage unit from which gaseous hydrogen fuel is drawn, an engine comprising a combustion chamber and a piping system to draw the gaseous hydrogen fuel from the solid hydride storage unit, the piping system being interposed between the solid hydride storage unit and the combustion chamber. The combustion chamber is receptive of the gaseous hydrogen fuel drawn from the solid hydride storage unit by the piping system and is configured to combust the gaseous hydrogen fuel to drive an operation of the engine.

United States patent application US 2017254270 discloses a discloses a gas turbine engine which comprises a gas turbine engine; a purge gas supply line connected to a first connection section on the fuel supply line connected to the gas turbine engine; a fuel discharge line connected to a second connection section of the fuel supply line which is located downstream of the first connection section; a blowoff valve disposed on the fuel discharge line, and a passage switching device which performs switching of the fuel supply line between a fuel supply mode and a purge mode. A check valve and a flame arrester are disposed on the fuel discharge line at locations that are downstream of the blowoff valve.

European patent application EP 3978807 discloses a direct fuel injection system for injecting hydrogen fuel into a gas turbine combustor, the fuel injection system comprising a plurality of fuel injector blocks. Each fuel injector block includes a fuel admission duct having a fuel inlet for receiving fuel from a manifold, a fuel outlet for delivering fuel into a mixing zone and a central axis extending from the fuel inlet to the fuel outlet. Each fuel injector block also includes a plurality of air admission ducts distributed around the air admission duct, and having an air inlet for receiving air from a diffuser and an air outlet for delivering air into the mixing zone for combustion with the fuel.

### BRIEF SUMMARY

According to a first aspect of the present invention, a gas turbine engine system comprises a hydrogen-burning gas turbine engine and a fuel system which comprises (i) a fuel line arranged to receive gaseous hydrogen at an input thereof and provide the gaseous hydrogen to combustion apparatus of the hydrogen-burning gas turbine engine; (ii) a vent line including a vent valve and having a first end coupled to the fuel line and a second end disposed remotely from the hydrogen-burning gas turbine engine, coupled to the exhaust (110) of the hydrogen-burning gas turbine engine; and (iii) a controller (112; 212) arranged to open the vent valve in response to detection of a shaft-break of the hydrogen-burning gas turbine engine. The vent line allows the hydrogen-burning gas turbine engine to be shut down more rapidly than is the case using a shut-off valve within the fuel line.

The second end of the vent line is coupled to the exhaust or bypass duct of the hydrogen-burning gas turbine engine. When the vent valve in the fuel line is opened, gaseous hydrogen within the fuel line is rapidly evacuated therefrom.

The gas turbine engine system may comprise a store of compressed gaseous hydrogen coupled to the input of the fuel line. A shut-off valve may be provided at the input of the fuel line, providing for the store of gaseous hydrogen to be isolated from the fuel line when the vent valve is opened, thus preventing further gaseous hydrogen entering the fuel line.

Alternatively, the gas turbine engine system may further comprise a store of liquid hydrogen and an evaporator arranged to receive and evaporate liquid hydrogen from the store and provide resulting gaseous hydrogen to the input of the fuel line.

The gas turbine engine system comprises a controller arranged to open the vent valve in response to detection of a shaft-break of the hydrogen-burning gas turbine engine. The controller may be a Full-Authority Digital Electronic Controller of the hydrogen-burning gas turbine engine.

A second aspect of the invention provides an aircraft comprising a gas turbine engine according to the first aspect.

### BRIEF DESCRIPTION OF THE DRAWINGS

Embodiments of the invention are described below by way of example only and with reference to the accompanying drawings in which:
- Figure 1: shows a first example gas turbine engine system of the invention; and
- Figure 2: shows a second example gas turbine engine system of the invention.

### DETAILED DESCRIPTION

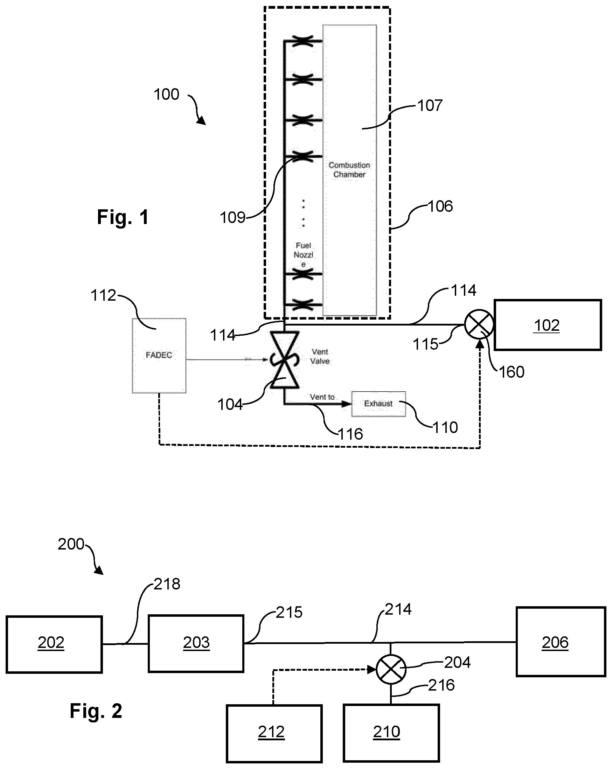

Referring to Figure 1, a gas turbine engine system 100 comprises a hydrogen-burning gas turbine engine which includes combustion apparatus 106. The combustion apparatus comprises a combustion chamber 107 fed by a plurality of fuel nozzles such as 109. The gas turbine engine system 100 further comprises a fuel store 102 of gaseous hydrogen and a fuel line 114 having an input 115, the fuel line 114 coupling the fuel store 102 to the combustion apparatus 106. The fuel store 102 is coupled to the input 115 of the fuel line 114 via a shut-off valve 160. A vent line 116 including a vent valve 104 couples the fuel line 114 to the exhaust flow 110 of the hydrogen-burning gas turbine engine. The state of the vent valve 104 (either open or closed) is controlled by a controller 112 which may be the FADEC (Full-Authority Digital Electronic Controller) of the hydrogen-burning gas turbine engine.

In normal operation of the gas turbine engine system 100, the vent valve 104 is closed, shut-off valve 160 is open and gaseous hydrogen introduced at the input 115 of the fuel line 114 is conveyed to the combustion apparatus 106. Upon detection of an engine shaft-break or similar condition requiring rapid engine shut-down, the controller 112 causes the vent valve 104 to switch from its closed state to its open state such that hydrogen within the fuel line 114 and combustion apparatus 106 is rapidly vented to the exhaust 110 of the hydrogen-burning gas turbine engine, thus producing rapid shut-down of the hydrogen-burning gas turbine engine. With the vent valve 104 in its open state, the combustion apparatus 106 and the input 115 of the fuel line 114 are both coupled to the exhaust 110, which provides a region much lower pressure than that found in the fuel line 114 during normal operation of the system 100 and hence rapid evacuation of gaseous hydrogen gas from the fuel line 114.

The shut-off valve 160 is also controlled by the FADEC 112 and closed when the vent valve 104 is switched from its closed state to its open state in order to prevent further gaseous hydrogen entering the fuel line 114.

In a variant of the system 100 not in accordance with the present invention, the vent line 116 couples the fuel line 114 to the bypass duct of the hydrogen-burning gas turbine engine, or alternatively to a dump tank having a volume of five times or ten times, or more, the volume of the fuel line 114. Hydrogen evacuated from the fuel line 114 may thereby be recovered and used subsequently. More generally, the end of the vent line 116 is at some location remote from the hydrogen-burning gas turbine engine, allowing hydrogen within the fuel line 114 to be evacuated and safely vented away from possible ignition sources.

Figure 2 shows a second example gas turbine engine system 200 of the invention not in accordance with the present invention. The system 200 comprises a hydrogen-burning gas turbine engine having combustion apparatus 206 and a fuel line 214 having an input 215 arranged to receive gaseous hydrogen in normal operation of the system 200. A vent line 216 includes a vent valve 204 and couples the fuel line 214 to a dump tank 210, the dump tank 210 having a volume which is five or ten times, or more, the volume of the fuel line 214. The state of the vent valve 204 (i.e. open or closed) is controlled by a controller 212, which may be the FADEC of the hydrogen-burning gas turbine engine.

In normal operation of the gas turbine engine system, the vent valve 204 is closed and gaseous hydrogen introduced into the input 215 of the fuel line 214 is conveyed to the combustion apparatus 206. Upon detection of an engine shaft-break or similar condition requiring rapid engine shut-down, the controller 212 switches the vent valve 204 to its open state such that fuel line 214 is coupled to the dump tank 210, thus rapidly evacuating gaseous hydrogen from the fuel line 214. The hydrogen removed to the dump tank 210 may be used subsequently by the system 100.

With the vent valve 204 in its open state, the hydrogen-burning gas turbine engine is rapidly shut down due to rapid evacuation of gaseous hydrogen from the fuel line 214 caused by the much lower pressure within the dump tank 210 compared to that in the fuel line 214.

In ordinary operation of the system 200, the vent valve 204 is in its closed state and gaseous hydrogen is provided to the input 215 of the first fuel line 214 from an evaporator 203 arranged to receive liquid hydrogen from a liquid hydrogen store 202 via a cryogenic line 218.

The input 215 of the first fuel line 214 may be provided with a shut-off valve (not shown) also under control of the controller 212 and arranged to close when the vent valve 204 is switched from its closed state to its open state, thus preventing further gaseous hydrogen entering the fuel line 214.

In a variant of the system 200, dump tank 210 is omitted and vent line 216 couples the fuel line 214 to the exhaust of the hydrogen-burning gas turbine engine of the system 200.

## Claims

1. A gas turbine engine system (100; 200) comprising a hydrogen-burning gas turbine engine and a fuel system which comprises:
(i) a fuel line (114; 214) arranged to receive gaseous hydrogen at an input (115; 215) thereof and provide the gaseous hydrogen to combustion apparatus (106; 206) of the hydrogen-burning gas turbine engine;
(ii) a vent line (116; 216) including a vent valve (104; 204) and having a first end coupled to the fuel line and a second end disposed remotely from the hydrogen-burning gas turbine engine, coupled to the exhaust (110) of the hydrogen-burning gas turbine engine; and
(iii) a controller (112; 212) arranged to open the vent valve in response to detection of a shaft-break of the hydrogen-burning gas turbine engine.

2. A gas turbine engine system (100) according to any preceding claim and wherein the fuel system further comprises a store (102) of compressed gaseous hydrogen coupled to the input of the fuel line.

3. A gas turbine engine system according to claim 2 further comprising a shut-off valve (160) at the input of the fuel line.

4. A gas turbine engine system (200) according to claim 1 wherein the fuel system further comprises a store of liquid hydrogen (202) and an evaporator (203) arranged to receive and evaporate liquid hydrogen from the store and provide resulting gaseous hydrogen to the input (215) of the fuel line (214).

5. A gas turbine engine system (100) according to any preceding claim wherein the controller is a Full-Authority Digital Electronic Controller (112) of the hydrogen-burning gas turbine engine.

6. A gas turbine engine system (100) according to claim 5 wherein the controller (112) is further arranged to close the shut-off valve in response to detection of a shaft-break of the hydrogen-burning gas turbine engine.

7. An aircraft comprising a gas turbine engine system according to any preceding claim.

## Patentansprüche

1. Gasturbinentriebwerksystem (100; 200), umfassend ein wasserstoffverbrennendes Gasturbinentriebwerk und ein Kraftstoffsystem, das Folgendes umfasst:
(i) eine Kraftstoffleitung (114; 214), die angeordnet ist, um gasförmigen Wasserstoff an einem Eingang (115; 215) davon aufzunehmen und den gasförmigen Wasserstoff einer Verbrennungsvorrichtung (106; 206) des wasserstoffverbrennenden Gasturbinentriebwerks bereitzustellen;
(ii) eine Entlüftungsleitung (116; 216), die ein Entlüftungsventil (104; 204) enthält und ein erstes Ende, das an die Kraftstoffleitung gekoppelt ist, und ein zweites Ende aufweist, das entfernt von dem wasserstoffverbrennenden Gasturbinentriebwerk vorgesehen ist und das an den Auslass (110) des wasserstoffverbrennenden Gasturbinentriebwerks gekoppelt ist; und
(iii) eine Steuerung (112; 212), die angeordnet ist, um das Entlüftungsventil als Reaktion auf eine Detektion eines Wellenbruchs des wasserstoffverbrennenden Gasturbinentriebwerks zu öffnen.

2. Gasturbinentriebwerksystem (100) nach einem vorhergehenden Anspruch und wobei das Kraftstoffsystem ferner einen Speicher (102) für komprimierten gasförmigen Wasserstoff umfasst, der mit dem Eingang der Kraftstoffleitung gekoppelt ist.

3. Gasturbinentriebwerksystem nach Anspruch 2, ferner umfassend ein Absperrventil (160) an dem Eingang der Kraftstoffleitung.

4. Gasturbinentriebwerksystem (200) nach Anspruch 1, wobei das Kraftstoffsystem ferner einen Speicher für flüssigen Wasserstoff (202) und einen Verdampfer (203) umfasst, der angeordnet ist, um flüssigen Wasserstoff von dem Speicher aufzunehmen und zu verdampfen und resultierenden gasförmigen Wasserstoff für den Eingang (215) der Kraftstoffleitung (214) bereitzustellen.

5. Gasturbinentriebwerksystem (100) nach einem vorhergehenden Anspruch, wobei die Steuerung ein Full-Authority Digital Electronic Controller (112) des wasserstoffverbrennenden Gasturbinentriebwerks ist.

6. Gasturbinentriebwerksystem (100) nach Anspruch 5, wobei die Steuerung (112) ferner angeordnet ist, um das Absperrventil als Reaktion auf eine Detektion eines Wellenbruchs des wasserstoffverbrennenden Gasturbinentriebwerks zu schließen.

7. Luftfahrzeug, umfassend ein Gasturbinentriebwerksystem nach einem vorhergehenden Anspruch.

## Revendications

1. Système de moteur à turbine à gaz (100 ; 200) comprenant un moteur à turbine à gaz brûlant de l'hydrogène et un système de combustible qui comprend :
(i) une conduite de combustible (114 ; 214) agencée pour recevoir l'hydrogène gazeux au niveau d'une entrée (115 ; 215) de celle-ci et fournir l'hydrogène gazeux à l'appareil de combustion (106 ; 206) du moteur à turbine à gaz brûlant de l'hydrogène ;
(ii) une conduite d'évent (116 ; 216) comprenant une soupape d'évent (104 ; 204) et comportant une première extrémité couplée à la conduite de combustible et une seconde extrémité disposée à distance du moteur à turbine à gaz brûlant de l'hydrogène, couplée à l'échappement (110) du moteur à turbine à gaz brûlant de l'hydrogène ; et
(iii) un dispositif de commande (112 ; 212) agencé pour ouvrir la soupape d'évent en réponse à la détection d'une rupture d'arbre du moteur à turbine à gaz brûlant de l'hydrogène.

2. Système de moteur à turbine à gaz (100) selon une quelconque revendication précédente et ledit système de combustible comprend en outre un dispositif de stockage (102) d'hydrogène gazeux comprimé couplé à l'entrée de la conduite de combustible.

3. Système de moteur à turbine à gaz selon la revendication 2, comprenant en outre une soupape d'arrêt (160) au niveau de l'entrée de la conduite de combustible.

4. Système de moteur à turbine à gaz (200) selon la revendication 1, ledit système de combustible comprenant en outre un dispositif de stockage d'hydrogène liquide (202) et un évaporateur (203) agencé pour recevoir et évaporer l'hydrogène liquide en provenance du dispositif de stockage et fournir l'hydrogène gazeux résultant à l'entrée (215) de la conduite de combustible (214).

5. Système de moteur à turbine à gaz (100) selon une quelconque revendication précédente, ledit dispositif de commande étant un dispositif de commande électronique numérique à pleine autorité (112) du moteur à turbine à gaz brûlant de l'hydrogène.

6. Système de moteur à turbine à gaz (100) selon la revendication 5, ledit dispositif de commande (112) étant en outre agencé pour fermer la soupape d'arrêt en réponse à la détection d'une rupture d'arbre du moteur à turbine à gaz brûlant de l'hydrogène.

7. Aéronef comprenant un système de moteur à turbine à gaz selon une quelconque revendication précédente.
